Europäisches Patentamt

European Patent Office

Office européen des brevets

(19)

(11) Veröffentlichungsnummer : **0 288 566 B1**

(12) EUROPÄISCHE PATENTSCHRIFT

(45) Veröffentlichungstag der Patentschrift :
24.04.91 Patentblatt 91/17

(51) Int. Cl.⁵ : **H05B 11/00**

(21) Anmeldenummer : 87900732.6

(22) Anmeldetag : 10.11.86

(86) Internationale Anmeldenummer :
PCT/SU86/00112

(87) Internationale Veröffentlichungsnummer :
WO 88/03741 19.05.88 Gazette 88/11

(54) INDUKTIONSPLASMAANLAGE.

(43) Veröffentlichungstag der Anmeldung :
02.11.88 Patentblatt 88/44

(45) Bekanntmachung des Hinweises auf die
Patenterteilung :
24.04.91 Patentblatt 91/17

(84) Benannte Vertragsstaaten :
AT DE GB IT SE

(56) Entgegenhaltungen :
JP-B- 524 783
SU-A- 462 320
US-A- 1 832 483
US-A- 4 139 722

(73) Patentinhaber : VSESOJUZNY
NAUCHNO-ISSLEDOVATELSKY
PROEKTNO-KONSTRUKTORSKY I
TEKHNOLOGICHESKY INSTITUT
ELEKTROTERMICHESKOGO
OBORUDOVANIA
VNIIETO, ul. Nizhegorodskaya, 29
Moscow 109052 (SU)

(72) Erfinder : REZUNENKO, Alexandr Lvovich
ul. Lenina, 11-65 Moskovskaya obl.
Istra, 143500 (SU)
Erfinder : KONDRATIEV, Vladimir Mikhailovich
ul. 9-ya Gvardeiskaya, 43-39
Moskovskaya obl. Istra, 143500 (SU)
Erfinder : FOMIN, Nikolai Ivanovich
ul. Tashkentskaya, 4-2-83
Moscow, 109444 (SU)
Erfinder : SVIDO, Alexandr Viktorovich
ul. Bosova, 1-19
Moskovskaya obl. Istra, 143500 (SU)
Erfinder : MALINOVSKY, Vladimir Sergeevich
pr. Vernadskogo, 9-542
Moscow, 117311 (SU)
Erfinder : DOLGOV, Viktor Vasilievich
Leninsky pr., 66-69
Moscow, 117299 (SU)

(74) Vertreter : Ebbinghaus, Dieter et al
Patentanwälte v. Füner, Ebbinghaus, Finck
Mariahilfplatz 2 & 3
W-8000 München 90 (DE)

## Beschreibung

Gejet der Technik

Die Erfindung bezieht sich auf elektrische Schmelzanlagen und betrifft insbesondere eine Induktionsplasmaanlage.

Zugrundeliegender Stand der Technik

In der Gießerei-und Hüttenwensen haben Induktionsschmezanlagen eine breite Anwendung gefunden. Jedoch ist die Möglichkeit, aktive metallurgische Prozesse in diesen durchzufübren infolge einer niedrigen Temperatur der zu machenden Schlaken (ihre Temperatur darf die Schmelzguttemperatur nicht überschreiten) beschränkt, Wodurch die Intensität der an der Metall-Schlacke-Grenze ablaufenden physikalisch-chemischen Prozesse wesentlich herabgesetzt wird. Der Durchsatz der Induktionsanlagen ist durch den zulässigen Wert der spezifischen Leistung infolge Auftretens von unerwünschten elektrodynamischen Erscheinungen, insbesondere von einem zu hohen Meniskus und einer zu großen Zirkulationsgeschwindigkeit des Schmelzgutes begrenzt.

Die obengenannten Nachteile sind in den Induktionsplasmaanlagen beseitigt, in denen zwei Erwärmungsverfahren, u.zw. die Induktions- und die Plasmaerwärmung vereinigt sind. Derartige Anlagen gestatten, die Schmelzdauer und den Stromverorauch pro herzustellende Tonne Metall wesentlich zu verringern, die Schmelzgutqualität durch einen verringerten Gehalt an Gasen, nicht metallischen Einschlüssen und schädlichen Beimengungen wesentlich zu verbessern, eine aktive technologische Metallbehandlung infolge Vorhandenseins der "heißen" Schlacke durchzuführen, günstige Bedingungen für das Umschmelzen und die Regenerierung von Erz- und Brennstoffpellets zu schaffen, die einen aussichtsreichen Rohstoff für die Reinmetallerzeugung durch kosunabhängige metallurgische Verfahren darstellen, sowie die Beschränkungen inbezug auf die Erhöhung der spezifischen Leistung zu beheben.

So ist eine Induktionsplasmaanlage (siehe den SU-Urheberschein Nr. 462320, veröffentlicht im Blatt "Entdeckungen, Erfindungen, Gebrauchsmuster, Warenzeichen", Nr. 8, 1975, bekannt enthaltend ein Gefaß zum Schmelzen des Einsatzes, das sich in einem Induktor befindetn, der an eine Kondesatorenbatterie und eine Wechselstromquelle angeschlossen ist, sowie mindestens ein Plasmatron, der mit dem Induktor elektrisch verbunden, u.zw. mit dem Induktor in Reihe geschaltet ist.

In einer derartigen Anlage wird bei einem zufälligen Abreißen des Plasmalichtbogens bzw. bei einer Abschaltung Schmelzführung zustandekommt, der Induktorstromkreis geöffnet, was zu einer Selbstabschaltung des Induktors von der Stromquelle und als Folge zur Überspannung an der Kondensatorenbatterie und zu ihrem Ausfall führt. Außerdem fehlt hier die Möglichkeit einer getrennten Steuerung der Betriebszustande des Induktors und des Plasmatrons zur Leistungsumverteilung unter diesen während des Schmelzvorganges, die in der beschriebenen Anlage mit der Veranderung der Parameter des einzuschmelzenden Einsatzes spontan erfolgt.

Bei der genannten Anlage kann das Plasmatron nur mit Wechselstrom betrieben werden. Jedoch ist es zweckmäßig, daß das Plasmatron mit Gleichstrom betrieben wird, weil der Gleichstromlichtbogen die Form eines gerichteten Kegels mit einem scharfen Umriß besitzt und eine bestimmte "Elastizität und Biegsamkeit" aufweist, was gestattet, einen tiefen Schacht im Einsatz schnell durchzubrennen. In diesem Fall wird praktisch die gesamte vom Plasmatron eingebrachte Leistung für die Erhitzung des Einsetzes verbraucht, wodurch der Wirkungsgrad der Anlage erhöht wird.

Es ist ebenfalls eine Induktionplasmaalange (siehe die PCT-Anmeldung SU 86/00048, WO 87/07467) bekannt, die ein Gefäß zum Schmelzen des Einsatzes enthält das sich in einem Induktor befindet der an eine Kondensatorenbatterie und eine regelbare Stromquelle angeschossen istn, mit der sich mindestens ein Plasmatron elektrisch verbindet.

In der genannten Anlage ist das Plasmatron bzw. eine Gruppe von Plasmatronen parallel mit einem Teil der Induktorwindungen über ein Schaltelement und einen Gleichrichter geschaltet und wird mit Wechsel- und Gleichstrom betrieben. Dabei erfolgt die Leistungsumverteilung unter dem Induktor und dem Plasmatron stufenweise. Außerdem werden durch den Gleichrichter die Verluste vergrößert und als Folge der Wirkungsgrad der Anlage herabgesetzt.

Offenbarung der Erfindung

Der Erfindung leigt die Aufgabe zugrunde, eine Induktionsplasmaanlage mit einer derartigen Stromquelle und mit einer derartigen elektrischen Verbindung zwischen dem Plasmatron und dieser Stromquelle zu schaffen, durch welche der Wirkungsgrad der Anlage erhölt und eine stufenlose Leistung sumverteilung unter dem Induktor und dem Plasmatron wahrend des Schmelzvorganges ermöglicht wird.

Die gestellte Aufgabe wird dadurch gelöst, daß in der Induktionsplasmaalangen, die ein Gefäß zum Schmelzen des Einsatzes enthält, das sich im Induktor befindet, der parallel mit einer Kondensatorenbatterie und einer regelbaren Stromquelle geschaltet ist, mit der sich mindestens ein Plasmatron elektrisch verbindet, erfindungsgemäß die Stromquelle einen Gleichrichter und einen Wechselrichter besitzt, dessen Eingang an der Ausgang des Gleichrichters angeschlossen ist, wobei das Plasmatron an den Eingang des Weckselrichters angeschlossen ist.

Zweckmäßigerweise werden in der Induktionsplasmaalange beim Vorhandensein einer Gruppe von Plasmatronen samtliche Plasmatrone miteinander in Reine geschaltet und an den Eingang des Weckselrichters angeschlossen.

Durch den Anschluß des Plasmatrons an den Eingang des Wechselrichters wird der Regelbereich der Leistung des Induktors und des Plasmatrons erweitert und deren stufenlose Umverteilung unter diesen sichergestellt. Dabei werden die Schmelzdauer verkürzt, die nutzlosen Wärmeverluste reduziert und als Folge der Wirkungsgrad der Anlage erhölt und der Stromverbrauch verringert.

Kurzbeschreibung der Zeichnungen

Nachstehend wird die Erfindung an Hand der Beschreibung von konkreten Ausführungsvarianten derselben unter Bezugnahme auf die beiliegenden Zeichnungen veranschaulicht, in denen es zeigt :

Fig. 1 – Funktionsschema der erfindungsgemäßen Induktionsplasmaalange (Längsschnitt durch den Induktor und das Schmelzgefäß) ;
Fig. 2 – ditto wie in Fig. 1, mit zwei Plasmatrohen, gemäß der Erfindung.

Die bevorzugte Ausführungsvariante der Erfindung

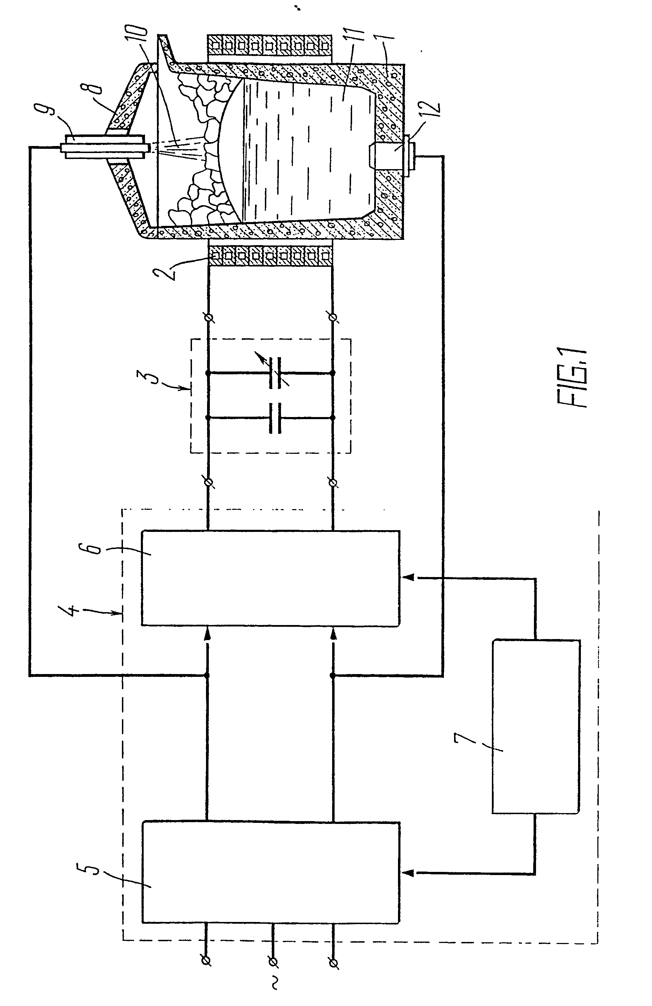

Die Induktionsplasmaanlage enthält ein Gefäß 1 (Fig. 1) zum Schmelzen des Einsatzes, das sich in einem Induktor 2 befindet, der parallel mit einer Kondensatorenbatterie 3 und einer regelbaren Stromquelle 4 geschaltet ist. Die Stromquelle 4 besitzt einen Gleichrichter 5, einen Wechselrichter 6, dessen Eingang an den Ausgang des Gleichrichters 6 angeschlossen ist, und eine Steuereinheit 7 für den Gleichrichter und den Wechselrichter.

In Deckel 8, der das Gefäß 1 verschließt, ist mindestens eine mittels einer Verstelleinrichtung (in Fig. nicht gezeigt) senkrecht verstellbares Plasmatron, im der gegebenen Variante ein Elektrolichbogen-Plasmatron 9 angeordnet, das an den Eingang des Wechselrichters 6 angeschlossen ist. Zum Schließen des Arbeitsstromkreises des Plasmatrons 9 über den Plasmalichtbogen 10 und das Abschmelzmetall 11 dient eine Bodenelektrode 12, die im Boden des Gefäßes 1 eingebaut ist. Der Stromkreis des Plasmatrons 9 wird durch folgende Elemente gebildet : Eingang des Wechselrichters 6 – Plasmatron 9 – Plasmalichtbogen 10 – Abschmelzmetall 11 – Bodeneliktrode 12 – Eingang des Wechselrichters 6.

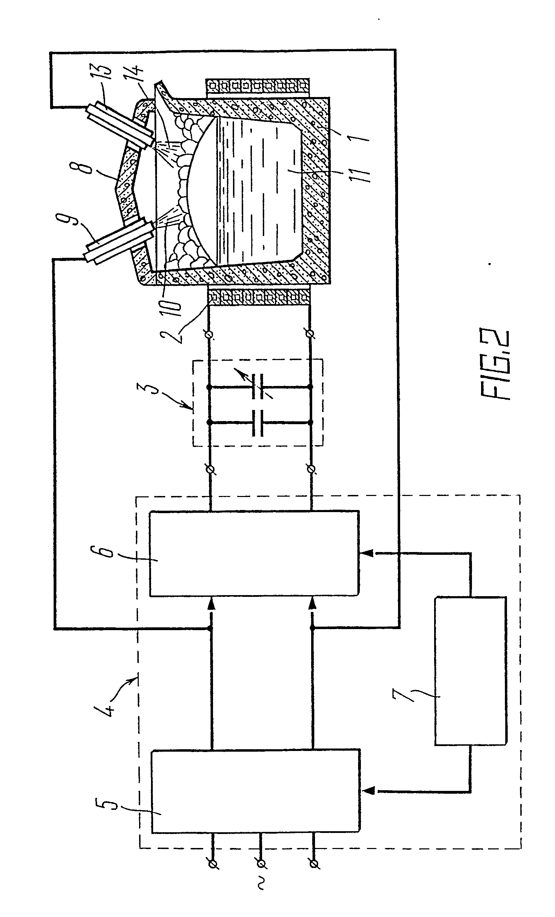

Möglich ist eine andere Ausführungsvariante der Induktionsplasmaanlage, die der obenbeschriebenen im wesentlichen ähnlich ist. Der Unterschied besteht darin, daß die Anlage ein zweites Plasmatron 13 (Fig. 2) enthält, das mit dem Plasmatron 9 in Reihe geschaltet ist. Dabei entfällt die Bodenelektrode 12 (Fig. 1), weil der Arbeitsstromkreis des Plasmatrons 13 (Fig. 2) über den Plasmalichtbogen 14, das Metall 11 und den Plasmalichtbogen 10 des Plasmatrons 9 geschlossen wird.

Die Induktionsplasmaanlage funktioniert folgenderweiste

In das Gefäß 1 (Fig. 1) wird der einzuschmelzende Einsatz aufgegeben. Durch die regelbare Kapazität der Kondensatorenbatterie 3 wird der Blindwiderstand des Induktor-Metall-Systems ausgeglichen. Die Stromquelle 4 wird eingeschaltet, und die Durchwärmung des ausgegebenen Einsatzes wird mit Hilfe des Induktors 2 begonnen. Mit einem Oszillator (in Fig. nicht gezeigt) wird ein Hilfslichtbogen zwischen den Elektroden des Plasmatrons 9 gezündet. Dabei wird vorher die Zuführung des plasmabildenden Gases an das Plasmatron 9 gewährleistet. Dann wird der Hauptlichtbogen 10 zwischen der Katode des Plasmatrons 9 und dem Einsatz gezündet, und der Schmelzvorgang beginnt.

Um den Schmelzvorgang zu beschleunigen, wird er bei gleichzeitiger Funktion des Induktors 2 und des Plasmatrons 9 begonnen. In diesem Fall wird durch eine hohe Temperatur des Plasmalichtbogens 10 ein schnelles Niederschmelzen des Einsatzes und durch das elektromagnetische Feld des Induktors 2 eine intensive Vermischung des Abschmelzmetalls 11 gewährleistet, wodurch seine lokale Überhitzung im Anodenfleck des Lichtbogens 10 verhindert wird. Durch die Steuereinheit 7 wird über den Gleichrichter 5 und den Wechselrichter 6 ein optimaler elektrischer Betriebszustand des Systems "Induktor-Metall- Plasmatron" in Abhängigkeit vom gegebenen technologischen Prozeß eingestellt.

Die Steuereinwirkung der Steuereinheit 7 auf den Gleichrichter 5 erfolgt nach dem Regelwinkel α und auf den Wechselrichter 6 nach der Frequenz ω des Wechselrichtens des Stroms.

Die Ausgangsspannung U des Wechselrichters 6 hängt sowohl vom Regelwinkel α als auch von der Frequenz ω ab und wird nach der Gleichung

$$U = \frac{1{,}11\,U_d}{\cos}$$

bestimmt, wobei sind $U_d$ – Ausgangsspannung des Gleichrichters 5, die vom winkel α abhängt ;
φ – Phasenwinkel zwischen dem Ausgangsstrom und der Ausgangsspannung des Wechselrichters 6, der von der Frequenz ω abhängt.

Durch die Einwirkung der Signale der Steuereinheit 7, die dem winkel α und der Frequenz ω proportional sind, auf den Gleichrichter 5 bzw. den Wechselrichter 6 kann eine stufenlose und voneinander unabhängige Regelung der Spannung am Plasmatron 9 und Induktor 2 und folglich eine strufenlose Umverteilung der Aufnahmeleistung unter dem Plasmatron 9 und dem Induktor 2 erreicht werden. In praktischen Bedingungen ändert sich die Speisespannung $U_d$ des Plasmatrons 9 von 20% bis 100% des Nennwertes und die Speisespannung U des Induktors 2 von 15% bis 100% des Nennwertes, wobei das Verhältnis der Spannung $U_k$ zur Spannung $U_d$ die Zahl 1,3 nicht unterschreiten darf.

Mit dem Niederschmelzen des ersten Beschickungssatzes wird die Stromquelle 4 vom Versorgungsnetz abgeschaltet und ein neuer Beschickungssatz ins Gefäß 1 aufgegeben. Dann wird das Gefäß 1 wieder mit dem Deckel 8 geschlossen. An das Plasmatron 9 und die Bodenelektrode 12 wird Spannung angelegt, der Lichtbogen 10 wird gezündet und der Schmelzvorgang wird bis zum vollständigen Niederschmelzen des gesamten Einsatzes fortgesetzt.

Nach dem Abschluß des Schmelzvorganges wird das Metall oberhalb der Schmelztemperatur überhitzt und notwendigerfalls raffiniert. Das erfolgt entweder beim gemeinsamen Betrieb des Induktors 2 und des Plasmatrons 9 oder nur mittels des Induktors 2.

Die Induktionsplasmaanlage nach der in Fig. 2 dargestellten Variante funktioniert ähnlich wie oben beschrieben.

Durch den Anschluß des Plasmatrons bzw. einer Gruppe von Plasmatronen an den Eingang des Wechselrichters wird die Wahl ihres optimalen Betriebszustandes während des Schmelzvorganges erleichtert, wodurch die Schmelzdauer verkürzt, der Wirkungsgrad der Anlage erhöht und ihre technologischen Möglichkeiten erweitert werden.

Industrielle Anwendbarkeit

Die Induktionsplasmaalage ist zum Schmelzen und zur technologischen Behandlung von hochwertigen Eisen- und Nichteisenmetallen und -legierungen in der Metallurgie und der Gußproduktion bestimmt.

Ansprüche

1. Induktionsplasmaanlage, die ein Gefäß zum Schmelzen des Einsatzes enthält, das sich im Induktor befindet, der parallel mit einer Kondensatorenbatterie und einer regelbaren Stromquelle geschaltet ist, mit der sich mindestens ein Plasmatron elektrisch verbindet, dadurch **gekennzeichnet**, daß die regelbare Stromquelle (4) einen Gleichrichter (5) und einen wechselrichter (6) besitzt, dessen Eingang an den Ausgang des Gleichrichters (5) angeschlossen ist, wobei das Plasmatron (9) an den Eingang des Wechselrichters (6) angeschlossen ist.

2. Induktionsplasmaanlage nach Anspruch 1, dadurch **gekennzeichnet**, daß beim Vorhandensein einer Gruppe von Plasmatronen (9, 13) sämtliche Plasmatrone (9, 13) miteinander in Reine geschaltet und an den Eingang des wechselrichters (6) angeschlossen sind.

Revendications

1. Disposition d'induction à plasma comprenant un récipient pour fuser la charge, se trouvant dans l'inducteur, qui est connecté en parallèle à une batterie de condensateurs et à une source de courant réglable avec laquelle est connecté électriquement au moins un plasmatron, charactérisé en ce que la source de courant réglable (4) comprend un redresseur (5) et un onduleur (6) dont l'entrée est raccordée à la sortie du redresseur (5), le plasmatron (9) étant raccordé à l'entrée d'onduleur (6).

2. Disposition d'induction à plasma selon la revendication 1, charactérisé en ce qu'en présence d'une groupe de plasmatrons (9, 13) tous les plasmatrons (9, 13) sont montés en série et raccordés à l'entrée d'onduleur (6).

Claims

1. An induction plasma unit comprising a vessel for melting a charge, received inside an inductor connected in parallel with a capacitor battery and a controllable power source electrically connected to at least one plasmatron, characterized in that the controllable power source (4) includes a rectifier (5) connected to the input of an inverter (6), with at least one plasmatron (9) being connected to the input of the inverter (6).

2. An induction plasma unit as claimed in Claim 1, characterized in that, when a group of plasmatrons (9, 13) is provided, all plasmatrons (9, 13) are serially connected to one another and conned to the input of the inverter (6).

FIG.1

5

FIG.2